# EUROPEAN PATENT SPECIFICATION

(11) **EP 3 255 258 B1**
(45) Date of publication and mention of the grant of the patent: **03.07.2019**
(21) Application number: 16746569.9
(22) Date of filing: 01.02.2016
(51) Int. Cl.: F01N 3/20, F01N 3/08, F01N 3/28, F01N 3/10, F01N 9/00, F01N 11/00, F01N 13/00, F02D 41/02

(54) **EXHAUST GAS PURIFICATION SYSTEM FOR INTERNAL COMBUSTION ENGINE, INTERNAL COMBUSTION ENGINE, AND EXHAUST GAS PURIFICATION METHOD FOR INTERNAL COMBUSTION ENGINE**
ABGASREINIGUNGSSYSTEM FÜR VERBRENNUNGSMOTOR, VERBRENNUNGSMOTOR UND ABGASREINIGUNGSVERFAHREN FÜR VERBRENNUNGSMOTOR
SYSTÈME DE PURIFICATION DES GAZ D'ÉCHAPPEMENT POUR MOTEUR À COMBUSTION INTERNE, MOTEUR À COMBUSTION INTERNE ET PROCÉDÉ DE PURIFICATION DES GAZ D'ÉCHAPPEMENT POUR UN MOTEUR À COMBUSTION INTERNE

(30) Priority: 06.02.2015 JP 2015022016
(43) Date of publication of application: 13.12.2017
(73) Proprietor: Isuzu Motors Limited, Shinagawa-ku, Tokyo 140-0013 (JP)
(72) Inventor: NAGAOKA, Daiji, Fujisawa-shi Kanagawa 252-0881 (JP); NAKADA, Teruo, Fujisawa-shi Kanagawa 252-0881 (JP); SAKAMOTO, Takayuki, Fujisawa-shi Kanagawa 252-0881 (JP)
(74) Representative: Miller Sturt Kenyon
(86) International application number: PCT/JP2016/052905
(87) International publication number: WO 2016/125738

(56) References cited:
- EP-A2- 1 930 572
- DE-T5-112008 003 421
- JP-A- 2000 320 324
- JP-A- 2008 038 812
- JP-A- 2008 101 562
- JP-A- 2010 526 233
- US-A- 5 722 236

## Description

### TECHNICAL FIELD

The present invention relates to an exhaust gas purification system for an internal combustion engine, an internal combustion engine, and an exhaust gas purification method for the internal combustion engine which can avoid a lack of temperature increment of each catalyst device, an overshooting at the time of increasing a temperature, heat degradation of a catalyst, erosion of the catalyst so as to perform the regeneration processing reliably when each catalyst device including an exhaust gas purification device of the internal combustion engine performs regeneration processing.

### BACKGROUND ART

Generally, an exhaust gas purification system is used which includes an exhaust gas purification device which has catalyst devices such as an oxidation catalyst, a device (DOC), a particulate collection device (CSF, SCRF, and the like), a selective reduction catalyst (SCR) device, and a lean NOx trap catalyst device (LNT) to purify purification object components such as hydrocarbon (HC), carbon monoxide (CO), particulate substance (PM), and nitrogen oxide (NOx) included in exhaust gases of the internal combustion engine such as a diesel engine.

In the exhaust gas purification system, a temperature-rising control of the exhaust gas is regularly performed for the release and the reduction (NOx regeneration) of NOx stored in the lean NOx trap catalyst device, the combustion-removal (PM regeneration) of the particulate substance collected in the particulate collection device, the removal (sulfur purge) of the sulfur component accumulated in various catalyst devices such as an oxidation catalyst device or the lean NOx trap catalyst device, and the like.

In the related art, at the time of the temperature-rising control of the exhaust gas, a detection temperature of an exhaust gas temperature sensor provided in the vicinity of any one catalyst device in the catalyst devices, and the estimation temperature of any one catalyst device obtained by following methods are set as a control temperature which is a control value of a feedback control with respect to a target temperature of the exhaust gas in the temperature-rising control. In the case of some catalyst devices, normally, in view of responsiveness, the temperature relating to the catalyst device in which the heat generation amount by the combustion of unburned hydrocarbon (HC) supplied to increase a temperature is largest is used as the control temperature steadily.

With respect thereto, as described, for example, in Japanese Unexamined Patent Application Publication No. 2013-174203, an exhaust gas purification device is proposed which includes a selective reduction catalyst, a particulate filter which is arranged on the exhaust gas upstream side from the selective reduction catalyst and in which an oxidation catalyst layer is formed to further collect the particulate in the exhaust gas, a liquid injection nozzle through which the hydrocarbon based liquid can be injected toward the particulate filter, and a liquid feeding unit which supplies the liquid to the liquid injection nozzle. In the exhaust gas purification device which purifies the exhaust gas of the engine, the temperature of the exhaust gas relating to the particulate filter is detected using a temperature sensor, and the liquid feeding unit is controlled on the basis of a detection output of the temperature sensor.

However, in a zone-coat and the like in which a plurality of catalyst devices or the catalyst layers are coated for each part in separate colors, a place (catalyst device) in which the heat generation amount is largest in the exhaust passage may be different according to an operating condition of the engine. For example, in the case of a system which is configured by the oxidation catalyst device, the lean NOx trap catalyst device, and the particulate collection device, when an excess air ratio λ in the exhaust gas is high, and the concentration of the oxygen is high, the most hydrocarbon is combusted by the oxidation catalyst device on the upstream side to generate heat. For this reason, in the lean NOx trap catalyst device or the particulate collection device on the downstream side, the temperature of each catalyst device is increased not by the generation of the combustion heat of the hydrocarbon, but by the heat transmission of the exhaust gas of which the temperature is increased by the oxidation catalyst device.

On the other hand, in a case where the excess air ratio of the exhaust gas is low and the concentration of the oxygen is low such as the sulfur purge (S purge: sulfur purge) control or rich combustion of NOx regeneration, the combustion of the hydrocarbon is caused using the oxygen adsorbed in the lean NOx trap catalyst device or the oxygen generated by NOx reduction, and thus the generation amount of the combustion heat of the hydrocarbon in the lean NOx trap catalyst device is larger than that in the oxidation catalyst device.

Similarly, in the case of the exhaust gas purification system configured by a plurality of catalyst devices in combination, a place in which the generation amount of the fuel heat is largest is changed according to the operating condition of the engine. Therefore, as in the related art, when the control temperature at the time of the temperature-rising control is fixed to a temperature relating to a specified catalyst device such as the catalyst device in which the heat generation amount due to the combustion of the hydrocarbon is largest, an insufficient temperature increment, an overshooting at the time of increasing a temperature, erosion, and the like may be occur according to the operating condition of the engine in another catalyst device other than the specified catalyst device.

### Citation List

### [Patent Literature]

[Patent Literature 1]: Japanese Unexamined Patent Application Publication No. 2013-174203

DE 11 2008 003421 discloses a method and system for regenerating a particulate filter, comprising desulfating a lean NOx trap, desulfating or regenerating a hydrocarbon-selective catalytic reduction catalyst, desulfating or regenerating a urea-selective catalytic reduction catalyst, or a combination thereof.

EP 1930572 discloses a method for operating an exhaust gas after-treatment system, which involves triggering a regeneration of a particle filter by a temperature rise of an exhaust gas before the particle filter, by inner engine measures or by an after-injection combusted at an oxidation catalytic converter. A determination of the exhaust gas composition is conducted before the filter. A regulation of the exhaust gas temperature is implemented before the filter by the determination and regulation of the exhaust gas composition, which is correlated with the exhaust gas temperature or change of the exhaust gas temperature, or by the change of the composition.

US 5722236 discloses a method and apparatus for inferring and controlling the temperature of a NOx trap located downstream from a three-way catalyst that employs a temperature sensor to correct a temperature estimation model under relatively steady-state conditions to provide a more accurate estimate of NOx trap temperature and three-way catalyst temperature. The three-way catalyst may also include a temperature sensor for improving the instantaneous catalyst temperature estimation.

### SUMMARY OF THE INVENTION

### Technical Problem

The present inventor found, through tests, such a relation between the change of the catalyst device in which a heat generation amount is largest in an exhaust passage and an increased degree of temperature is high and the oxygen concentration of the exhaust gas when the operating condition of the engine is changed. For example, a phenomenon is found in which at the time of the PM regeneration processing or the high load of the engine in which the excess air ratio in the exhaust gas is high and the oxygen concentration is high, the heat generation amount of the oxidation catalyst device is large, and on the other hand, at the time of the sulfur purge control or the low load of the engine in which the excess air ratio in the exhaust gas is low, and the oxygen concentration is low, the heat generation amount of the lean NOx trap catalyst device is large.

From this point, it is acknowledged that in order to prevent that the insufficient temperature increment, the overshooting at the time of increasing a temperature, the erosion, and the like occur at the time of the temperature-rising control in the catalyst device, when the temperature-rising control is performed more optimally in response to the operating condition of the engine, preferably, a position of the control temperature in the feedback control, in other words, the catalyst device relating to the control temperature to be the target temperature is selected and changed in consideration of the oxygen concentration of the exhaust gas. That is, preferably, the catalyst device relating to the control temperature, in other words, a position where the control temperature is measured is changed on the basis of the oxygen concentration of the exhaust gas.

More specifically, following knowledge is obtained. When the excess air ratio or the oxygen concentration is high, the control temperature relating to the temperature of the former oxidation catalyst device may be adopted, and when the excess air ratio or the oxygen concentration is low, the control temperature relating to the temperature of the lean NOx trap catalyst device may be adopted. In addition, in order to avoid a drastic change of the control in association with the switch of the control temperature, preferably, the measurement temperature relating to the temperature of the former oxidation catalyst device and the measurement temperature relating to the temperature of the lean NOx trap catalyst device are weighted (target temperature ratio), the weight is gradually changed according to the excess air ratio or the oxygen concentration, the control temperature is calculated on the basis of a weighted average thereof, and the temperature-rising control is performed at the feedback control such that the control temperature becomes the target temperature.

The present invention has been made in consideration of the above situation, and an object thereof is to provide an exhaust gas purification system for an internal combustion engine, an internal combustion engine, and an exhaust gas purification method for the internal combustion engine in which during the temperature-rising control of the exhaust gas for recovering an exhaust gas purification ability of the catalyst device, a lack of temperature increment of catalyst devices, an overshooting at the time of increasing a temperature, heat degradation of a catalyst, and erosion of the catalyst can be avoided using the exhaust gas purification system for the internal combustion engine which includes an oxidation catalyst device on an upstream side and a lean NOx trap catalyst device on a downstream side in an exhaust passage of the internal combustion engine, thereby performing a regeneration processing reliably.

### Solution to Problem

An exhaust gas purification system for an internal combustion engine of the present invention to achieve the above-described object is defined in claim 1.

With this configuration, at the time of the temperature-rising control of the exhaust gas for performing regeneration processing on the catalyst devices included in the exhaust gas purification device, the measurement position of the control temperature which is the control amount of the feedback control in the temperature-rising control, that is, the control temperature to be a target temperature is changed and set in consideration of the oxygen concentration of the exhaust gas, and more specifically, the control temperature is set to the temperature relating to the catalyst device in which the heat generation amount is largest at that time in the exhaust gas purification system and the temperature is increased most, whereby the temperature-rising control of the exhaust gas can be optimized. Therefore, the lack of temperature increment of each of the catalyst devices, the overshooting at the time of increasing a temperature, the heat degradation of the catalyst, and the erosion of the catalyst can be avoided so that the regeneration processing can be performed reliably.

Preferably, the above-described exhaust gas purification system for the internal combustion engine further includes: a first temperature sensor which measures a first temperature relating to a temperature of the oxidation catalyst device; and a second temperature sensor which measures a second temperature relating to a temperature of the lean NOx trap catalyst device, and the controller is configured to, when the temperature-rising control of the exhaust gas in the regeneration control is performed to recover the purification ability of the exhaust gas purification system, perform a control such that the control temperature is set as the first temperature when the excess air ratio or the oxygen concentration of the exhaust gas passing through the exhaust passage is higher than an upper limit threshold set in advance, and the control temperature is set as the second temperature when the excess air ratio or the oxygen concentration of the exhaust gas passing through the exhaust passage is lower than a lower limit threshold set in advance, thereby obtaining following effect.

That is, when the heat generation amount of the oxidation catalyst device is larger than that of the lean NOx trap catalyst device, the excess air ratio and the oxygen concentration of the exhaust gas is higher than the upper limit threshold set in advance. Thus, the first temperature relating to the oxidation catalyst device is set as the control temperature, so that the temperature-rising control can be performed at the temperature of the oxidation catalyst device. In addition, when the heat generation amount of the lean NOx trap catalyst device is larger than that of the oxidation catalyst device, the excess air ratio and the oxygen concentration of the exhaust gas is lower than the lower limit threshold set in advance. Thus, the second temperature relating to the lean NOx trap catalyst device is set as the control temperature, so that the temperature-rising control can be performed at the temperature of the lean NOx trap catalyst device. Therefore, the temperature-rising control of the exhaust gas can be optimized with the relatively simple control.

Preferably, when the temperature-rising control of the exhaust gas in the regeneration control is performed to recover the purification ability of the exhaust gas purification system, when the excess air ratio or the oxygen concentration of the exhaust gas passing through the exhaust passage is equal to or less than the upper limit threshold and equal to or more than the lower limit threshold, the controller performs a control to set the weight coefficient to be changed according to the excess air ratio or the oxygen concentration of the exhaust gas passing through the exhaust passage, and to set the control temperature to a weighted average value of the first temperature and the second temperature using the weight coefficient. Therefore, the temperature-rising control can be performed while a drastic change due to the switch of the control temperature with respect to the change of the excess air ratio or the oxygen concentration is avoided.

The internal combustion engine of the present invention to achieve the above-described object includes the above-described exhaust gas purification system for the internal combustion engine, so as to make the same operational effect as that of the above-described exhaust gas purification system for the internal combustion engine.

An exhaust gas purification method for the internal combustion engine of the present invention to achieve the above-described object is defined in claim 5.

### Advantageous Effects of the Invention

According to the exhaust gas purification system for the internal combustion engine, the internal combustion engine, and the exhaust gas purification method for the internal combustion engine in the present invention, at time of the temperature-rising control of the exhaust gas for performing the regeneration processing on the catalyst devices included in the exhaust gas purification device, the measurement position of the control temperature which is the control amount of the feedback control in the temperature-rising control, that is, the control temperature to be a target temperature is changed and set in consideration of the oxygen concentration of the exhaust gas, and more specifically, the control temperature is set to the temperature relating to the catalyst device in which the heat generation amount is largest at that time in the exhaust gas purification system and the temperature is increased most, thereby optimizing the temperature-rising control of the exhaust gas. Therefore, it is possible to avoid a lack of temperature increment of each of the catalyst devices, an overshooting at the time of increasing a temperature, heat degradation of the catalyst, and erosion of the catalyst, and it is possible to perform the regeneration processing reliably.

### BRIEF DESCRIPTION OF THE DRAWINGS

FIG. 1 is a view schematically illustrating a configuration of an internal combustion engine which includes an exhaust gas purification system for an internal combustion engine of an embodiment according to the present invention.
FIG. 2 is a view schematically illustrating a relation between a weight coefficient which is a weight ratio of a first temperature to a second temperature and an excess air ratio of the exhaust gas.

### DESCRIPTION OF EMBODIMENTS

Hereinafter, an exhaust gas purification system for an internal combustion engine, an internal combustion engine, and an exhaust gas purification method for the internal combustion engine in the embodiment according to the present invention will be described with reference to the drawings. Incidentally, the internal combustion engine of the embodiment according to the present invention includes an exhaust gas purification system for an internal combustion engine of the embodiment according to the present invention, so as to make the same operational effect as an operational effect made by the exhaust gas purification system for the internal combustion engine (to be described later).

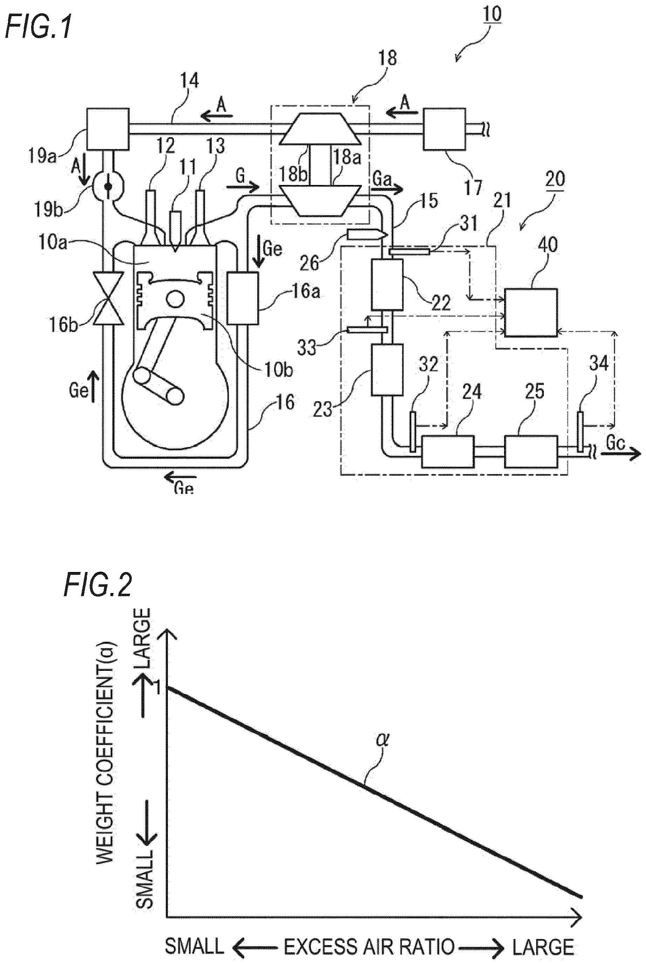

First, an internal combustion engine (hereinafter, engine) 10 and an exhaust gas purification system 20 of the internal combustion engine of the embodiment according to the present invention will be described with reference to FIG. 1. The engine 10 are provided with a fuel injection device 11, an intake valve 12, and an exhaust valve 13 facing a cylinder 10a, and further with an intake passage 14 communicating with the intake valve 12, an exhaust passage 15 communicating with the exhaust valve 13, and an EGR passage 16.

The intake passage 14 is provided with an air cleaner 17, a compressor 18b of a turbocharger (turbo type supercharger) 18, an intercooler 19a, and an intake throttle valve 19b in order from the upstream side. Further, the exhaust passage 15 is provided with a turbine 18a of the turbocharger 18 and an exhaust gas purification device 21 in order from the upstream side. In addition, the EGR passage 16 is provided by connecting the intake passage 14 on the downstream from the compressor 18b with the exhaust passage 15 on the upstream from the turbine 18a. The EGR passage 16 is provided with an EGR cooler 16a, an EGR valve 16b in order from the upstream side.

As needed, new air A guided from the atmosphere is fed to the cylinder (cylinder) 10a through the intake valve 12 in association with the exhaust gas (EGR gas) Ge flowing in the intake passage 14 from the EGR passage 16. In addition, the exhaust gas G generated in the cylinder 10a flows out to the exhaust passage 15 through the exhaust valve 13. Some of the exhaust gas G flows to the EGR passage 16 as the EGR gas Ge. The remaining exhaust gas Ga (= G - Ge) flows in the exhaust gas purification device 21 through the turbine 18a, and after being purified, is released as the purified exhaust gas Gc into the atmosphere through a muffler (not illustrated) and a tail pipe (not illustrated).

In the configuration of FIG. 1, the exhaust gas purification device 21 of the exhaust gas purification system 20 includes catalyst devices such as an oxidation catalyst (DOC) device 22, a particulate collection device (CSF) 23, a lean NOx trap catalyst device (LNT) 24, and a subsequent-stage oxidation catalyst (DOC) device 25. Incidentally, the catalyst devices may be provided in the exhaust gas purification device 20 in the reverse order to the arrangement order of the particulate collection device 23 and the lean NOx trap catalyst device 24, that is, in order of the oxidation catalyst device 22, the lean NOx trap catalyst device 24, the particulate collection device 23, and the subsequent-stage oxidation catalyst device 25.

The fuel injection device 26 which injects the unburned fuel into the exhaust passage 15 is arranged in the exhaust passage 15 on the upstream side of the oxidation catalyst device 22. The unburned fuel is injected into the exhaust passage 15 at the time of the temperature-rising control of the exhaust gas such as a NOx regeneration control on the lean NOx trap catalyst device 24, a sulfur purge control on the oxidation catalyst device 22 and the lean NOx trap catalyst device 24, and a PM regeneration control on the particulate collection device 23. By the injection, the hydrocarbon which is an unburned fuel is oxidized by the oxidation catalyst device 22 and the like, and by oxidation heat, the temperature of the exhaust gas Ga is increased. When the temperature of the exhaust gas Ga is increased or the temperature of the hydrocarbon is increased by the combustion in the catalyst devices 22, 23, and 24, the temperature of the lean NOx trap catalyst device 24 is increased to a temperature range of the release and the reduction of the occlusion NOx, the temperature of the particulate collection device 23 is increased such a temperature range that can realize the PM combustion, or the temperatures of the oxidation catalyst device 22 and the lean NOx trap catalyst device 24 are increased to such a temperature range that can realize desulfurization. In this manner, the exhaust gas purification ability of the catalyst devices 22, 23, and 24 are recovered.

The first temperature sensor 31 which detects the temperature TDOC of the exhaust gas Ga flowing in the oxidation catalyst device 22 is arranged in the exhaust passage 15 on the upstream side (inlet side) of the oxidation catalyst device 22. In addition, the second temperature sensor 32 which detects a temperature TLNT of the exhaust gas Ga flowing in the lean NOx trap catalyst device 24 is arranged in the exhaust passage 15 on the upstream side of the lean NOx trap catalyst device 24. In addition, the third temperature sensor 33 which detects the temperature TCSF of the exhaust gas Ga flowing out from the oxidation catalyst device 22 to flow in the particulate collection device 23 is arranged in the exhaust passage 15 between the oxidation catalyst device 22 and the particulate collection device 23.

A λ-sensor 34 which measures the excess air ratio λ of the exhaust gas Ga or an oxygen concentration Co or an oxygen concentration sensor (not illustrated) is arranged on the downstream side of the exhaust gas purification device 20. The λ-sensor or the oxygen concentration sensor may be arranged on the upstream side of the exhaust gas purification device 20, or may be arranged in an exhaust manifold.

Herein, the temperature TDOC detected by the first temperature sensor 31 is set as a first temperature T1 relating to the oxidation catalyst device 22. The temperature TLNT detected by the second temperature sensor 32 is set as a second temperature T2 relating to the lean NOx trap catalyst device 24. The temperature TCSF detected by the third temperature sensor 33 is set as a third temperature T3 relating to the particulate collection device 23.

Incidentally, the average value of the temperatures detected by the temperature sensors before and after the oxidation catalyst device 22 may be set as the first temperature T1. The average value of the temperatures detected by the temperature sensors before and after the lean NOx trap catalyst device 24 may be set as the second temperature T2. In addition, the average value of the temperatures detected by the temperature sensors before and after the particulate collection device 23 may be set as the third temperature. Further, instead of the exhaust gas temperatures on the upstream side of the catalyst devices 22, 23, and 24, the exhaust gas temperatures on the respective downstream sides may be used.

A controller 40 is provided which controls the exhaust gas purification system 20 of the internal combustion engine of the present invention. Normally, the controller 40 is configured to be embedded in an engine control unit (ECU) which controls the whole operating condition of the engine 10, but may be configured separately.

In the exhaust gas purification system 20 of the internal combustion engine of the embodiment according to the present invention, when the temperature-rising control of the exhaust gas Ga in the regeneration control is performed for recovering the purification ability of the exhaust gas purification system 20, the controller 40 which controls the exhaust gas purification system 20 performs a control to change the measurement position of the control temperature Tc which is the control amount of the feedback control in the temperature-rising control, according to the excess air ratio λ or the oxygen concentration Co of the exhaust gas G passing through the exhaust passage 15.

With the configuration, at the time of the temperature-rising control of the exhaust gas Ga for the regeneration processing to recover the purification ability of the catalyst devices 22 to 25 included in the exhaust gas purification device 20, the amount of the unburned fuel (hydrocarbon) injected by the fuel injection device 26 is adjusted such that the control temperature Tc becomes a target temperature Tm set according to each regeneration processing. The measurement position of the control temperature Tc is changed according to the excess air ratio λ or the oxygen concentration Co of the exhaust gas Ga. More specifically, the measurement position is changed to the measurement temperature which reflects best the temperature (any one of T1, T2, and T3) of the catalyst device (any one of 22, 23, and 24) in which the heat generation amount is largest at that time in the exhaust passage 15 and the temperature is increased most.

That is, when the temperature-rising control of the exhaust gas Ga in the regeneration control is performed for recovering the purification ability of the exhaust gas purification system 20, the controller 40 performs a control such that the control temperature Tc is set as the first temperature T1 when the excess air ratio λ or the oxygen concentration Co of the exhaust gas Ga passing through the exhaust passage 15 is higher than an upper limit threshold A1 set in advance, and the control temperature Tc is set as the second temperature T2 when the excess air ratio λ or the oxygen concentration Co is lower than a lower limit threshold A2 set in advance. Incidentally, the upper limit threshold A1 and the lower limit threshold A2 are set in advance by the experiments and the like, and are stored in the controller 40. In addition, when the control is simplified, the upper limit threshold A1 and the lower limit threshold A2 may be set the same as each other, and in this case, the first temperature T1 and the second temperature T2 preferably become the substantially same value.

In this manner, when the heat generation amount of the oxidation catalyst device 22 is larger than that of the lean NOx trap catalyst device 24, the excess air ratio λ and the oxygen concentration Co of the exhaust gas Ga is larger than the upper limit threshold A1. Thus, the first temperature T1 relating to the oxidation catalyst device 22 is set as the control temperature Tc, and the temperature-rising control can be performed at the first temperature T1 of the oxidation catalyst device 22. In addition, when the heat generation amount of the lean NOx trap catalyst device 24 is larger than that of the oxidation catalyst device 22, the excess air ratio λ and the oxygen concentration Co of the exhaust gas Ga is lower than the lower limit threshold A2 set in advance. Thus, the second temperature T2 relating to the lean NOx trap catalyst device 24 is set as the control temperature Tc, and the temperature-rising control can be performed at the second temperature T2 of the lean NOx trap catalyst device 24. Therefore, the temperature-rising control of the exhaust gas Ga can be optimized with the relatively simple control.

When the temperature-rising control of the exhaust gas Ga in the regeneration control is performed to recover the purification ability of the exhaust gas purification system 20, when the excess air ratio λ or the oxygen concentration Co of the exhaust gas Ga passing through the exhaust passage 15 is equal to or less than the upper limit threshold A1 and equal to or more than the lower limit threshold A2, the controller 40 performs a control to set a weight coefficient α to be changed according to the excess air ratio λ or the oxygen concentration Co, and to set the control temperature Tc to a weighted average value T12 of the first temperature T1 and the second temperature T2 using the weight coefficient α. In this manner, the temperature-rising control can be performed while a drastic change due to the switch of the control temperature Tc with respect to the change of the excess air ratio λ or the oxygen concentration Co is avoided.

The weight coefficient α can be determined such that, for example, T12 = T1 × α + T2 × (1 - α), or T12 = (T1 × α + T2)/(1 + α). The weight coefficient α is set in advance by the experiments and the like with respect to the excess air ratio λ, and is stored in the controller 40. In FIG. 2, the weight coefficient α is set to be increased as the excess air ratio λ is smaller, and to be decreased as the excess air ratio λ is larger. Incidentally, in FIG. 2, a correlation between the excess air ratio λ and the weight coefficient α is a linear relation falling downward to the right. However, the linear relation of FIG. 2 is illustrated as an example, and a curvilinear relation convex to a lower left side or a curvilinear relation convex to an upper right side may be adopted.

Incidentally, on the basis of the oxygen concentration λ of the exhaust gas Ga, in a case where the number of the temperatures of the catalyst device as a maximum heat generation amount is three or more, for example, in the case of TDOC, TLNT, and TCSF, the number of the weight coefficient is increased, and a temperature as the control temperature Tc is obtained as a weighted average. For example, the weight coefficients α and β are set in advance with respect to the oxygen concentration λ of the exhaust gas Ga, and the control temperature Tc is set such that Tc = TDOC × α + TLNT × β + TCSF × (1 - α - β).

Next, the exhaust gas purification method for the internal combustion engine of the embodiment according to the present invention will be described. This method is an exhaust gas purification method for the internal combustion engine in the above-described exhaust gas purification system 20 of the internal combustion engine. In the method, when the temperature-rising control of the exhaust gas Ga in the regeneration control is performed to recover the purification ability of the exhaust gas purification system 20, the measurement position of the control temperature Tc which is the control amount of the feedback control in the temperature-rising control is changed according to the excess air ratio λ or the oxygen concentration Co of the exhaust gas Ga passing through the exhaust passage 15.

According to the exhaust gas purification system 20 of the internal combustion engine, the internal combustion engine 10, and the exhaust gas purification method for the internal combustion engine which are described above, at time of the temperature-rising control of the exhaust gas Ga for performing the regeneration processing on the catalyst devices 22, 23, and 24 included in the exhaust gas purification device 21, the measurement position of the control temperature Tc which is the control amount of the feedback control in the temperature-rising control, that is, the control temperature Tc to be the target temperature Tm is changed and set in consideration of the excess air ratio λ or the oxygen concentration Co of the exhaust gas Ga, and more specifically, the control temperature Tc is set to the temperatures T1, T2, and T3 relating to the catalyst devices 22, 23, and 24 in which the heat generation amount is largest at that time in the exhaust gas purification system 20 and the temperature is increased most, thereby optimizing the temperature-rising control of the exhaust gas Ga. Therefore, it is possible to avoid a lack of temperature increment of each of the catalyst devices 22, 23, and 24, an overshooting at the time of increasing a temperature, heat degradation of the catalyst, and erosion of the catalyst, and it is possible to perform the regeneration processing reliably.

### Reference Signs List

- 10: engine (internal combustion engine)
- 11: fuel injection device
- 15: exhaust passage
- 20: exhaust gas purification system
- 21: exhaust gas purification device
- 22: oxidation catalyst (DOC) device
- 23: particulate collection device
- 24: lean NOx trap catalyst device (LNT)
- 25: subsequent-stage oxidation catalyst (DOC) device
- 26: fuel injection device
- 31: first temperature sensor
- 32: second temperature sensor
- 33: third temperature sensor
- 34: λ-sensor
- 40: controller
- A: new air
- G: generated exhaust gas
- Ga: exhaust gas passing through exhaust gas purification device
- Gc: purified exhaust gas
- Ge: EGR gas

## Claims

1. An exhaust gas purification system (20) for an internal combustion engine (10), comprising:
an oxidation catalyst device (22) on an upstream side in an exhaust passage (15) of an internal combustion engine (10); and
a lean NOx trap catalyst device (24) on a downstream side,
wherein the exhaust gas purification system (20) is **characterized in that** a controller (40) which controls the exhaust gas purification system (20) is configured to, when a temperature-rising control of an exhaust gas in a regeneration control is performed to recover a purification ability of the exhaust gas purification system (20), perform a control that changes a measurement position of a control temperature which is a control amount of a feedback control in the temperature-rising control, according to an excess air ratio or an oxygen concentration of the exhaust gas passing through the exhaust passage (15).

2. The exhaust gas purification system (20) for the internal combustion engine (10) according to claim 1, the exhaust gas purification system (20) comprising:
a first temperature sensor (31) which measures a first temperature relating to a temperature of the oxidation catalyst device; and
a second temperature sensor (32) which measures a second temperature relating to a temperature of the lean NOx trap catalyst device,
wherein the controller (40) is configured to, when the temperature-rising control of the exhaust gas in the regeneration control is performed to recover the purification ability of the exhaust gas purification system (20), perform a control such that the control temperature is set as the first temperature when the excess air ratio or the oxygen concentration of the exhaust gas passing through the exhaust passage (15) is higher than an upper limit threshold set in advance, and the control temperature is set as the second temperature when the excess air ratio or the oxygen concentration of the exhaust gas passing through the exhaust passage (15) is lower than a lower limit threshold set in advance.

3. The exhaust gas purification system (20) for the internal combustion engine (10) according to claim 2, wherein
the controller (40) is configured to, when the temperature-rising control of the exhaust gas in the regeneration control is performed to recover the purification ability of the exhaust gas purification system (20), perform a control such that a weight coefficient is set to be changed according to the excess air ratio or the oxygen concentration of the exhaust gas passing through the exhaust passage (15), and the control temperature is set to a weighted average value of the first temperature and the second temperature obtained using the weight coefficient, when the excess air ratio or the oxygen concentration of the exhaust gas passing through the exhaust passage (15) is equal to or less than the upper limit threshold and equal to or more than the lower limit threshold.

4. An internal combustion engine (10) comprising:
the exhaust gas purification system (20) for the internal combustion engine (10) according to any one of claims 1 to 3.

5. An exhaust gas purification method for an internal combustion engine (10) having an exhaust gas purification system (20) for the internal combustion engine (10), which includes an oxidation catalyst device (22) on an upstream side and a lean NOx trap catalyst device (24) on a downstream side in an exhaust passage (15) of the internal combustion engine (10), the method being **characterized by** comprising:
changing, when a temperature-rising control of an exhaust gas in a regeneration control is performed to recover a purification ability of the exhaust gas purification system (20), a measurement position of a control temperature which is a control amount of a feedback control in the temperature-rising control, according to an excess air ratio or an oxygen concentration of the exhaust gas passing through the exhaust passage (15).

## Patentansprüche

1. Abgasreinigungssystem (20) für einen Verbrennungsmotor (10), umfassend:
eine Oxidationskatalysatorvorrichtung (22) auf einer stromaufwärts gelegenen Seite in einem Abgaskanal (15) eines Verbrennungsmotors (10); und
eine NOx-Speicherkatalysatorvorrichtung (24) auf einer stromabwärts gelegenen Seite,
wobei das Abgasreinigungssystem (20) **dadurch gekennzeichnet ist, dass** eine Steuereinrichtung (40), die das Abgasreinigungssystem (20) steuert, konfiguriert ist, um, wenn eine Temperaturanstiegssteuerung eines Abgases in einer Regenerationssteuerung durchgeführt wird, um eine Reinigungsfähigkeit des Abgasreinigungssystems (20) wieder herzustellen, eine Steuerung durchzuführen, die eine Messposition einer Steuertemperatur ändert, die eine Steuergröße einer Rückkopplungsregelung in der Temperaturanstiegssteuerung ist, entsprechend einem Luftüberschussverhältnis oder einer Sauerstoffkonzentration des Abgases, das durch den Abgaskanal (15) hindurchströmt.

2. Abgasreinigungssystem (20) für den Verbrennungsmotor (10) nach Anspruch 1, wobei das Abgasreinigungssystem (20) umfasst:
einen ersten Temperatursensor (31), der eine erste Temperatur in Bezug auf eine Temperatur der Oxidationskatalysatorvorrichtung misst; und
einen zweiten Temperatursensor (32), der eine zweite Temperatur in Bezug auf eine Temperatur der NOx-Speicherkatalysatorvorrichtung misst,
wobei die Steuereinrichtung (40) konfiguriert ist, um, wenn die Temperaturanstiegssteuerung des Abgases in der Regenerationssteuerung durchgeführt wird, um die Reinigungsfähigkeit des Abgasreinigungssystems (20) wieder herzustellen, eine Steuerung derart durchzuführen, dass die Steuertemperatur als die erste Temperatur eingestellt wird, wenn das Luftüberschussverhältnis oder die Sauerstoffkonzentration des Abgases, das durch den Abgaskanal (15) hindurchströmt, höher als ein vorher festgelegter oberer Grenzwert ist, und die Steuertemperatur als die zweite Temperatur eingestellt wird, wenn das Luftüberschussverhältnis oder die Sauerstoffkonzentration des Abgases, das durch den Abgaskanal (15) hindurchströmt, niedriger als ein vorher festgelegter unterer Grenzwert ist.

3. Abgasreinigungssystem (20) für den Verbrennungsmotor (10) nach Anspruch 2, wobei
die Steuereinrichtung (40) konfiguriert ist, um, wenn die Temperaturanstiegssteuerung des Abgases in der Regenerationssteuerung durchgeführt wird, um die Reinigungsfähigkeit des Abgasreinigungssystems (20) wieder herzustellen, eine Steuerung derart durchzuführen, dass ein Gewichtungskoeffizient eingestellt wird, der entsprechend dem Luftüberschussverhältnis oder der Sauerstoffkonzentration des Abgases, das durch den Abgaskanal (15) hindurchströmt, geändert wird, und die Steuertemperatur auf einen gewichteten Mittelwert der ersten Temperatur und der zweiten Temperatur, der unter Verwendung des Gewichtungskoeffizienten erhalten wird, eingestellt wird, wenn das Luftüberschussverhältnis oder die Sauerstoffkonzentration des Abgases, das durch den Abgaskanal (15) hindurchströmt, gleich oder kleiner als der obere Grenzwert und gleich oder größer als der untere Grenzwert ist.

4. Verbrennungsmotor (10), umfassend:
das Abgasreinigungssystem (20) für den Verbrennungsmotor (10) nach einem der Ansprüche 1 bis 3.

5. Abgasreinigungsverfahren für einen Verbrennungsmotor (10) mit einem Abgasreinigungssystem (20) für den Verbrennungsmotor (10), der eine Oxidationskatalysatorvorrichtung (22) auf einer stromaufwärts gerichteten Seite und eine NOx-Speicherkatalysatorvorrichtung (24) auf einer stromabwärts gerichteten Seite in einem Abgaskanal (15) des Verbrennungsmotors (10) aufweist, wobei das Verfahren **dadurch gekennzeichnet ist, dass** es umfasst:
das Ändern, wenn eine Temperaturanstiegsregelung eines Abgases in einer Regenerationssteuerung durchgeführt wird, um eine Reinigungsfähigkeit des Abgasreinigungssystems (20) wieder herzustellen, einer Messposition einer Steuertemperatur, die eine Steuergröße einer Rückkopplungsregelung in der Temperaturanstiegssteuerung ist, gemäß einem Luftüberschussverhältnis oder einer Sauerstoffkonzentration des Abgases, das durch den Abgaskanal (15) hindurchströmt.

## Revendications

1. Système de purification de gaz d'échappement (20) pour moteur à combustion interne (10), comprenant :
un dispositif de catalyseur d'oxydation (22) sur un côté en amont dans un passage d'échappement (15) d'un moteur à combustion interne (10) ; et
un dispositif de catalyseur de piège de NOx allégé (24) sur un côté en aval,
où le système de purification de gaz d'échappement (20) est **caractérisé en ce qu'**un contrôleur (40) qui contrôle le système de purification de gaz d'échappement (20) est configuré pour, quand un contrôle d'augmentation de température d'un gaz d'échappement dans un contrôle de régénération est effectué pour récupérer une capacité de purification du système de purification de gaz d'échappement (20), effectuer un contrôle qui change une position de mesure d'une température de contrôle qui est une quantité de contrôle d'un contrôle de rétroaction dans le contrôle d'augmentation de température, selon un rapport d'air en excès ou d'une concentration d'oxygène du gaz d'échappement passant à travers le passage d'échappement (15).

2. Système de purification de gaz d'échappement (20) pour le moteur à combustion interne (10) selon la revendication 1, le système de purification de gaz d'échappement (20) comprenant :
un premier détecteur de température (31) qui mesure une première température associée à une température du dispositif de catalyseur d'oxydation ; et
un second détecteur de température (32) qui mesure une seconde température du dispositif de piège de NOx allégé,
où le contrôleur (40) est configuré pour, quand le contrôle de température du gaz d'échappement dans le contrôle de régénération est effectué pour récupérer la capacité de purification du système de purification de gaz d'échappement (20), effectuer un contrôle de telle manière que la température de contrôle est réglée comme la première température quand le rapport d'air en excès ou la concentration d'oxygène du gaz d'échappement passant à travers le passage d'échappement (15) est supérieur à un seuil de limite supérieure réglé en avance, et la température de contrôle est réglée comme la seconde température quand le rapport d'air en excès ou la concentration d'oxygène du gaz d'échappement passant à travers le passage d'échappement (15) est inférieur à un seuil de limite inférieure réglé en avance.

3. Système de purification de gaz d'échappement (20) pour le moteur à combustion interne (10) selon la revendication 2, dans lequel
le contrôleur (40) est configuré pour, quand le contrôle d'augmentation de température du gaz d'échappement dans le contrôle de régénération est effectué pour récupérer la capacité de purification du système de purification de gaz d'échappement (20), effectuer un contrôle de telle manière qu'un coefficient de poids est réglé pour être changé selon le rapport d'air en excès ou la concentration d'oxygène du gaz d'échappement passant à travers le passage d'échappement (15), et la température de contrôle est réglée à une valeur moyenne pondérée de la première température et de la seconde température obtenues en utilisant le coefficient de poids, quand le rapport d'air en excès ou la concentration d'oxygène du gaz d'échappement passant à travers le passage d'échappement (15) est inférieur ou égal au seuil de limite supérieure et supérieur ou égal au seuil de limite inférieure.

4. Moteur à combustion interne (10) comprenant :
le système de purification de gaz d'échappement (20) pour le moteur à combustion interne (10) selon l'une quelconque des revendications 1 à 3.

5. Procédé de purification de gaz d'échappement pour moteur à combustion interne (10) ayant un système de purification de gaz d'échappement (20) pour le moteur à combustion interne (10), qui comprend un dispositif de catalyseur d'oxydation (22) sur un côté en amont et un dispositif de catalyseur de piège de NOx allégé (24) sur un côté en aval dans un passage d'échappement (15) du moteur à combustion interne (10), le procédé étant caractérisé comme comprenant :
le changement, quand un contrôle d'augmentation de température d'un gaz d'échappement dans un contrôle de régénération est effectué pour récupérer une capacité de purification du système de purification de gaz d'échappement (20), d'une position de mesure d'une température de contrôle qui est une quantité de contrôle d'un contrôle de rétroaction dans le contrôle d'augmentation de température, selon un rapport d'air en excès ou une concentration d'oxygène du gaz d'échappement passant à travers le passage d'échappement (15).
